# EUROPEAN PATENT APPLICATION

(11) **EP 4 553 248 A1**
(43) Date of publication of application: **14.05.2025**
(21) Application number: 23835883.2
(22) Date of filing: 07.07.2023
(51) Int. Cl.: E04F 15/18, B63B 35/00, E04F 15/02, E04F 15/06, F16F 15/02

(54) **LIGHTWEIGHT STRUCTURE MADE OF COMPOSITE MATERIAL**

(30) Priority: 08.07.2022 KR 20220084149
(71) Applicant: Chung, Tae Young, Seoul 05502 (KR)
(72) Inventor: PARK, Kong Ju, Seoul 05502 (KR); CHUNG, Tae Young, Seoul 05502 (KR)
(74) Representative: Witte, Weller & Partner Patentanwälte mbB
(86) International application number: PCT/KR2023/009649
(87) International publication number: WO 2024/010417

(57) **Abstract**

A lightweight structure made of a composite material is disclosed, the lightweight structure includes a multi-structural material including a plurality of unit structure bodies arranged sequentially in a width direction, in which each unit structure body includes a metallic upper plate, a metallic lower plate disposed apart from the upper plate by a predetermined gap, and a core layer formed between the upper plate and the lower plate and made of non-foaming polymer, and the unit structure body includes a bending structure in which both ends along a width direction of an entire structure are bent downward and include a " 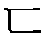 " shaped cross-sectional structure.

## Description

### [Technical Field]

The present disclosure relates to a lightweight structure made of composite materials, and more specifically, to a lightweight structure for floors, ceilings, and walls based on composite materials that is ultra-light but has structurally high-performance and can be used in various ways in shipbuilding and construction fields.

### [Background Art]

The most basic floor construction of structures such as a building and a ship is one of the most important constructions. To construct the floor of the structure, reinforced concretes are mainly used in buildings, while structural materials composed of steel plates and plate reinforcement are mainly used in ships.

The floor of the structure has various problems in terms of construction method and performance, and the most important of these is the problem of inter-floor noise. Since the floor material for ships is composed of only steel, it is the most vulnerable in terms of inter-floor noise, and the reinforced concrete, which is a floor material for buildings, has excellent performance in terms of inter-floor noise, but it is still difficult to completely block inter-floor noise, causing severe social problems, and in particular, the structural noise caused by the impact of heavy objects, which is weight impact noise, is considered the biggest problem.

Meanwhile, the biggest reason for inter-floor noise in multi-story buildings is that the floor structure of the upper level forms the ceiling structure of the lower level. In other words, since one concrete slab is shared between two floors, it is fundamentally vulnerable to noise transmission through this. Of course, there is structural noise transmitted through the walls rather than the floor and noise transmitted through the gaps in the building, but structural noise transmission due to sharing the floor structure is known to be the biggest cause of inter-floor noise.

A wet floating floor structure (stacked floor structure) and a double floor structure are known as methods to solve this inter-floor noise problem.

The wet floating floor structure is a method of absorbing or blocking sound transmission by mixing and stacking various heterogeneous materials inside and outside of the existing concrete slab. However, the wet floating floor structure has a fundamental problem in that it cannot completely block inter-floor noise because noise and vibration are inevitably transmitted along the floor composition layers connected by the stacking method.

The double floor structure is a structure that further installs a lightweight floor on a concrete slab that supports the structural strength of the building, that is, forms two floors and places an air layer between the two floors to block sound transmission. However, the conventional double floor structure requires the installation of tens to hundreds of supports to support between the lightweight floor and the concrete slab because the structural strength of the lightweight floor is not as strong as that of the concrete floor, and therefore, the transmission of noise/vibration through the numerous supports cannot be ignored.

In addition, the conventional double floor structure significantly increases installation labor-hours and costs, and also has many problems such as maintaining horizontality when performing heating work for structural reinforcement above the lightweight floor, problems in terms of constructability, and problems in terms of the finishing process.

### [Disclosure]

### [Technical Problem]

However, to significantly reduce inter-floor noise, a double floor structure, which is structurally completely separated while each has sufficiently strong structural performance, is most effective.

However, the problem is that it is realistically difficult to install a sturdy double floor structure with the existing material and construction method. In a general multi-story building, the rooms typically have a span or a gap between walls of about 3 to 8 m, and installing a structurally sturdy double floor structure in such a space requires structural reinforcement work that is almost equivalent to the existing floor construction. In addition, it is not realistic in both economic and technical aspects to build the double floor structure with reinforced concrete from the beginning when constructing a building.

In the case of ships, assuming that the secondary floor (upper floor) is manufactured with the existing steel plate structural members, at least 6 mm or thicker steel plates should be densely welded with 100 mm or thicker plate reinforcements at intervals of 600 to 800 mm to obtain satisfactory structural strength. In this case, a considerable amount of welding deformation occurs, so considerable post-correction work is additionally required to relieve the thermal deformation. In addition, the weight of the secondary floor made of steel itself is considerable, so it is very uneconomical in terms of structural design.

Accordingly, the present disclosure aims to provide a high-performance lightweight structure based on composite materials that can overcome the technical limitations described above and can be innovatively used in the future ship and construction fields.

In particular, the greatest technical challenge of the present disclosure is to provide a lightweight structure based on composite materials that is easy to manufacture, has excellent structural performance, and can be manufactured as a long-span structure, thereby making it possible to easily implement a sturdy double floor structure that has been technically difficult to implement without a support in the related art.

In addition, the present disclosure provides a lightweight structure which can be utilized not only as a floor structural material but also as a ceiling or wall structural material and can solve various additional problems, such as improving floor construction, ondol floor leveling construction, and ceiling material installation by utilizing structural characteristics.

The technical problems of the present disclosure are not limited to the technical problems mentioned above, and other technical problems not mentioned will be clearly understood by those skilled in the art from the description below.

### [Technical Solution]

According to one aspect of the present disclosure for achieving the above objects, there is provided a lightweight structure made of a composite material, the lightweight structure including: a metallic upper plate; a metallic lower plate disposed apart from the upper plate by a predetermined gap; and a multi-structural material including a core layer formed between the upper plate and the lower plate and made of non-foaming polymer, and including a bending structure in which both ends along the width direction of the entire structure are bent downward, thereby allowing a plurality of unit structural bodies each including a "⊏" shaped cross-sectional structure to be arranged sequentially in the width direction.

The unit structural body may include a flat plate part formed in a horizontal direction and a bent portion bent downward from both ends of the flat plate part.

The bent portions of the adjacent unit structural bodies may be structurally coupled to each other through bolting or welding.

Moreover, the adjacent unit structural bodies may be disposed apart from each other by a predetermined gap, and finishing construction may be performed to constitute a floor, ceiling, or wall in a space between the adjacent unit structural bodies.

Both ends of the multi-structural material along a longitudinal direction may be fixed to a wall of the building to form a floor structure or ceiling structure of the building.

When forming the floor structure of the building, the multi-structural material may be disposed with a gap on an upper side of a concrete slab forming a basic frame of the building to form a double floor structure.

A vibration-absorbing buffer structure including a vibration-reducing buffering material, spring, or hydraulic device may be applied to a connection area between the multi-structural material and the wall.

Meanwhile, the lightweight structure made of a composite material according to one aspect of the present disclosure may include an overlapping structural material in which the multi-structural materials are disposed to be overlapped vertically.

A pair of multi-structural materials constituting the overlapping structural material may be disposed in a direction in which the bent portions face each other.

Modularization may be performed by constructing an insulating material and heating/cooling pipe as pre-installation in a space between the pair of multi-structural materials.

A fireproof material may be additionally constructed between the insulating material and the multi-structural material.

Both ends of the overlapping structural material along a longitudinal direction may be fixed to a wall of a building to form a floor structure or ceiling structure of the building.

Both ends of each of an upper multi-structural material and a lower multi-structural material constituting the overlapping structural material along the longitudinal direction may be fixed to the wall.

When forming the floor structure of the building, a vibration-absorbing buffer structure including a vibration-reducing buffering material, spring or hydraulic device may be applied to a connection area between the upper multi-structural material and the wall.

### [Advantageous Effects]

According to the present disclosure as described above, it is possible to easily implement a sturdy double floor structure without the need for a separate plate reinforcement or supporting lower structure (beam), and therefore, there is an effect of effectively reducing inter-floor noise.

In addition, when utilizing the lightweight structure according to the present disclosure in a construction field, it is possible to realize an ultra-light and structurally high-performance floor structure, minimize structural connections between floor structures, simplify ondol floor leveling construction, and achieve various additional effects such as enabling the ultimate dry construction method and modular construction method that are not affected by the weather.

In addition, since the lightweight structure according to the present disclosure is ultra-light, when applied as a structural material for buildings and ships, the overall weight of the structure can be reduced, and compared to the steel plate structural member used in existing ships, it is very inexpensive, so it also has merits in terms of cost.

The effects of the present disclosure are not limited to the effects mentioned above, and other effects not mentioned will be clearly understood by those skilled in the art from the description below.

### [Description of Drawings]

FIG. 1 is a perspective view illustrating a unit structural body according to the present disclosure.
FIG. 2 is a front view illustrating various modification examples of the unit structural body according to the present disclosure.
FIGS. 3 to 6 are views for explaining first to fourth manufacturing methods for manufacturing a unit structural body according to the present disclosure, respectively.
FIGS. 7 and 8 are views illustrating first and second coupling structures of a multi-structural material according to the present disclosure, respectively.
FIG. 9 is a view illustrating an exemplary embodiment in which the multi-structural material according to the present disclosure is applied to a floor structure of a building.
FIGS. 10 to 13 are views illustrating first to fourth wall connection structures of the multi-structural material according to the present disclosure, respectively.
FIG. 14 is a view illustrating an exemplary embodiment in which the multi-structural material according to the present disclosure is applied to a ceiling structure of a building.
FIG. 15 is a view illustrating an arrangement structure of the overlapping structural material according to the present disclosure.
FIGS. 16 and 17 are views illustrating first and second usage examples of an overlapping structural material according to the present disclosure, respectively.
FIG. 18 is a view illustrating a wall connection structure of the overlapping structural material according to the present disclosure.
FIG. 19 is a cross-sectional view illustrating a conventional steel plate structural member applied to ships.

### [Best Mode]

The purpose and technical configuration of the present disclosure and the detailed operation and effect thereof will be more clearly understood by the detailed description based on the drawings attached to the specification of the present disclosure.

The terminology used herein is only used to describe specific exemplary embodiments and is not intended to limit the present disclosure. For example, terms such as "consisting of" or "including" used herein should not be construed as necessarily including all of the various components or various steps described in the disclosure, but should be construed as not including some of the components or some of the steps, or may further include additional components or steps. In addition, the singular expressions used herein include plural expressions unless the context clearly indicates otherwise.

Hereinafter, the present disclosure will be described in detail by describing preferred exemplary embodiments of the present disclosure with reference to the attached drawings. The exemplary embodiments described below are provided so that those skilled in the art can easily understand the technical idea of the present disclosure, and should not be construed as limiting the present disclosure thereby, and it is obvious that the exemplary embodiments of the present disclosure can have various applications to those skilled in the art.

A lightweight structure manufactured from a composite material according to the present disclosure may include embodiments of a unit structural body as a single body, a multi-structural material composed of a combination of a plurality of unit structural bodies, and an overlapping structural material composed of multi-structural materials doubly overlapping each other.

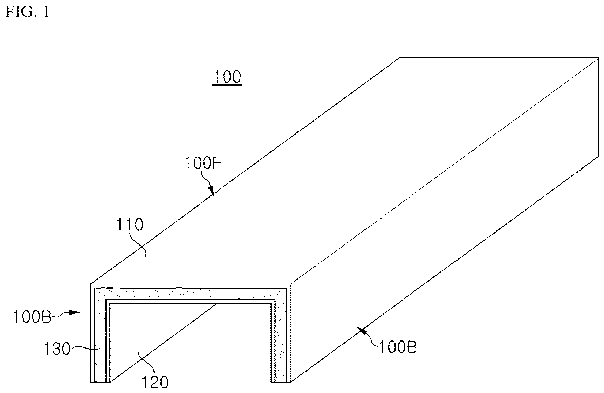

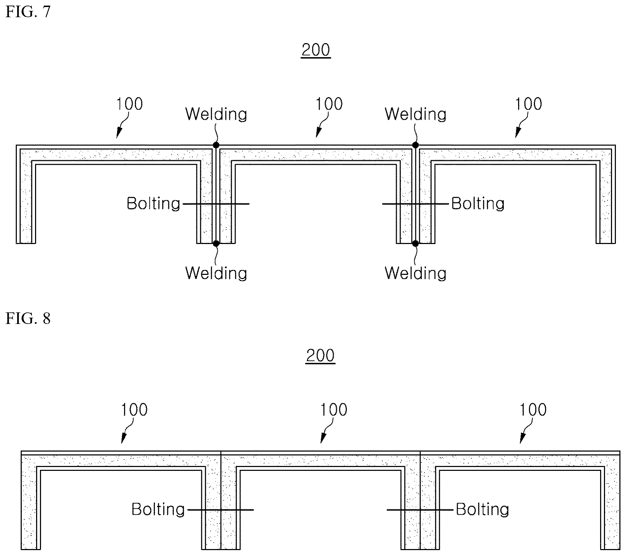

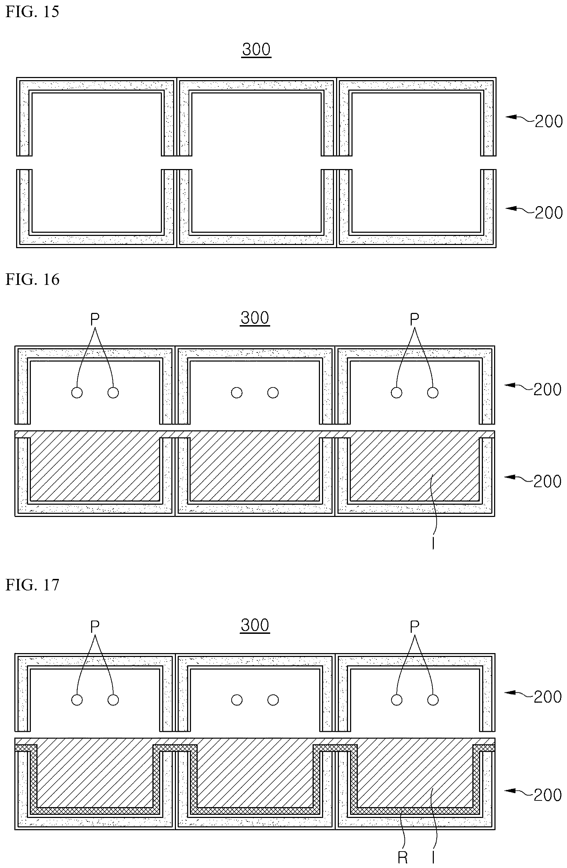

FIGS. 1 to 6 are views related to the explanation of a "unit structural body" which is a first embodiment of a lightweight structure according to the present disclosure, FIGS. 7 to 14 are views related to the explanation of a "multi-structural material" which is a second embodiment of the lightweight structure according to the present disclosure, and FIGS. 15 to 18 are views related to the explanation of an "overlapping structural material" which is a third embodiment of a lightweight structure according to the present disclosure.

### 1. First Embodiment - Unit Structural Body

### A. Structure of Unit Structural Body

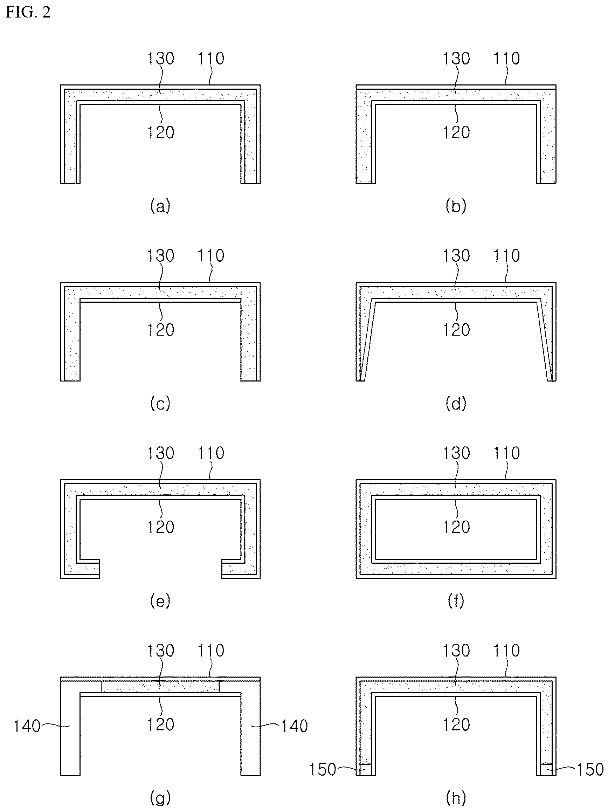

Referring to FIGS. 1 and 2, the unit structural body 100 according to the present disclosure may be made of a composite material, including a metallic upper plate 110, a metallic lower plate 120, and a core layer 130 formed between the upper plate 110 and the lower plate 120. Here, the core layer 130 may be a layer formed of a non-foaming polymer, more preferably, a non-foaming polyurethane.

The unit structural body 100 according to the present disclosure may include an overall " ⊏" shaped cross-sectional structure, including a bending structure in which both ends along a width direction are bent downward, and the bent portions at both ends may perform the role of plate reinforcements.

Here, the expression that it can "include" a " ⊏" shaped cross-sectional structure means that the cross-sectional structure of the unit structural body 100 is not necessarily limited to a "⊏" shape, and that any shape of cross-sectional structure can be taken as long as it includes a "⊏" shape.

The unit structural body 100 according to the present disclosure may include a flat plate part 100F formed in a horizontal direction and bent portions 100B bent downward from both ends of the flat plate part 100F. The flat plate part 100F is a structural member that primarily comes into contact with the design load when constructing a floor or ceiling structural member using the unit structural body 100 according to the present disclosure, and the bent portion 100B may function as a plate reinforcement that increases the strength and rigidity of the flat plate part 100F formed in a horizontal direction, thereby enhancing structural performance and preventing buckling.

As described above, the unit structural body 100 according to the present disclosure may have various shapes, including the modification examples illustrated in FIG. 2, as long as it includes the entire structure in which both ends along the width direction are bent downward. Hereinafter, representative shapes that the unit structural body 100 according to the present disclosure can take will be described with reference to FIG. 2.

(a) of FIG. 2 illustrates the most basic form of the unit structural body 100 illustrated in FIG. 1, in which both the upper plate 110 and the lower plate 120 are provided in a "⊏" shape, and the core layer 130 formed between the upper plate 110 and the lower plate 120 may also be configured to have a "⊏"-shaped cross-section.

In addition, the unit structural body 100 according to the present disclosure may be configured in a form in which the upper plate 110 is not bent and formed only in the horizontal direction, as illustrated in (b) of FIG. 2, and the outer surface of the core layer 130 having "⊏"-shaped a cross-section is exposed, or may be configured in a form in which the lower plate 120 is not bent and formed only in the horizontal direction, as illustrated in (c) of FIG. 2, and the inner surface of the core layer 130 having a "⊏"-shaped cross-section is exposed.

Even when one side of the core layer 130 is exposed as illustrated in (b) of FIG. 2 or (c) of FIG. 2, both ends of either the upper plate 110 or the lower plate 120 are bent and protrude downward, so that the bent portion 100B including the downward bent ends may exhibit sufficient structural performance as a plate reinforcement.

When at least one of the upper plate 110 and the lower plate 120 is configured in a "⊏"-shaped bent shape, it is preferable to bend the metal plates constituting the upper and lower plates 110 and 120 through bending processing. This is because the bent portion 100B of the unit structural body 100 according to the present disclosure is structurally strong when it has a continuous shape from the flat plate part 100F and there is no concern about thermal deformation or cracks due to welding.

The unit structural body 100 according to the present disclosure may have a triangular protrusion shape in which the inner surface of the bent portion 100B formed at both ends is formed to be inclined as illustrated in (d) of FIG. 2. In this case, it goes without saying that either the upper plate 110 or the lower plate 120 may be formed only in the horizontal direction as in the exemplary embodiment illustrated in (b) of FIG. 2 or (c) of FIG. 2 so that one side surface of the core layer 130 is exposed.

In addition, the unit structural body 100 according to the present disclosure may be configured in a form in which the lower end of the bent portion 100B is bent horizontally again toward the center in the width direction of the unit structural body 100 as illustrated in (e) of FIG. 2, or may be configured in a form in which the lower end of both bent portions 100B are bent again and connected to each other so that the upper plate 110 having a " ▭ "-shaped cross-section surrounds the lower plate 120 having a "▭"-shaped cross-section as illustrated in (f) of FIG. 2.

In the exemplary embodiments illustrated in (e) of FIG. 2 and (f) of FIG. 2, the unit structural body 100 has not only the "⊏" shape but also has a more extended shape, but still includes a "⊏"-shaped cross-sectional structure, and in the structure, the portions formed vertically at both ends serve as the plate reinforcements so that structural performance may be implemented.

Referring to (g) of FIG. 2, the unit structural body 100 according to the present disclosure may further include a separate metal angle 140 to implement a "⊏"-shaped cross-sectional structure. In this case, both the upper plate 110 and the lower plate 120 are formed only in the horizontal direction without being bent, and the metal angle 140 having a "¬ "-shaped bent shape is inserted and coupled between the upper plate 110 and the lower plate 120 at both ends, and a core layer 130 may fill the space formed between the upper plate 110, the lower plate 120, and the metal angle 140.

That is, the upper plate 110, lower plate 120, and core layer 130 constituting the unit structural body 100 according to the present disclosure do not necessarily have to be configured in a "⊏" shape, and the structure in which both ends are bent downward may be implemented by coupling a separate member such as the metal angle 140.

Finally, referring to (h) of FIG. 2, the unit structural body 100 according to the present disclosure may take a form in which the end portions of the upper plate 110 and the lower plate 120 are finished by finishing members 150 made of a metal or non-metallic material. The finishing member 150 finishes the end portion of the bent portion 100B formed by the bent portions of the upper plate 110 and the lower plate 120, and may perform functions such as sealing the space between the upper plate 110 and the lower plate 120 during the process of manufacturing the unit structural body 100 according to the present disclosure or assisting the coupling between the unit structural bodies 100.

In another unit structural body 100 of the present disclosure, the bent portion 100B which is bent from both ends along the width direction and protrudes downward acts to increase the section modulus of the entire structure, and the section modulus may be affected by the height or shape of the bent portion 100B which is a reinforcing structure.

In order for the bent portion 100B to effectively implement the structural performance as a plate reinforcement, it is preferable to include a metal material having a high yield stress. Accordingly, the present disclosure configures the lower bent portion 100B by including at least one of the upper plate 110 and the lower plate 120 in the bent portion 100B or by using a separate metal angle 140.

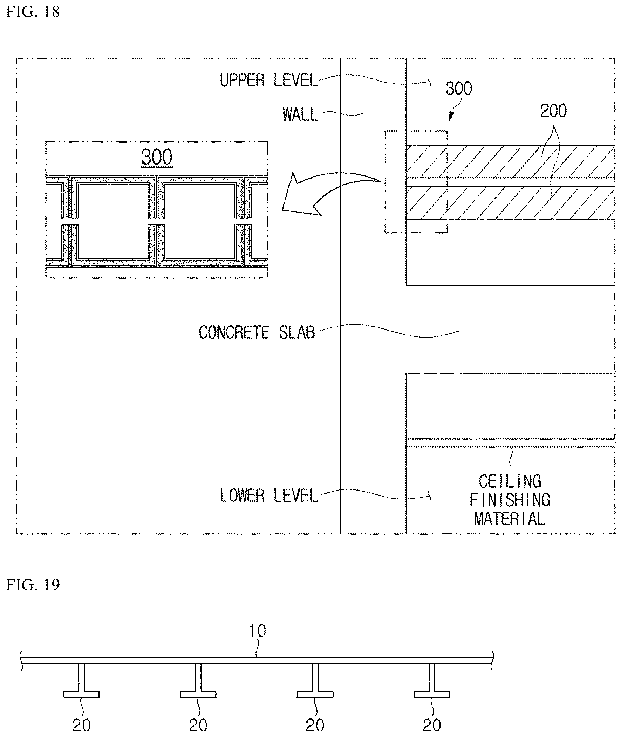

FIG. 19 illustrates a steel plate structural member 10 composed only of metal, which is widely used as a structural member of general ships. The conventional steel plate structural member 10 illustrated in FIG. 19 has plate reinforcements 20 welded to the lower surface for structural reinforcement by welding. However, this conventional method has a problem in that welding deformation occurs when the plate reinforcements 20 are connected to the lower surface of the steel plate structural member 10.

However, unlike the conventional steel plate structural member 10 in which a plate and a reinforcing member functioning as a structural member are manufactured separately and then coupled by welding or bolting, the unit structural body 100 according to the present disclosure has a form in which the flat plate part 100F and the bent portion 100B are manufactured as an integral part and the plate reinforcing structure is already included within itself. Therefore, there is no concern at all about the occurrence of welding deformation problems unlike the conventional case, and there is no need for additional hole construction or local structural reinforcement work for bolting coupling between the plate and the reinforcing member, and it is possible to have structurally stable performance.

Another problem of the related art is that when forming a composite structure of upper and lower plates with thin metal plates, it may be impossible to perform post-welding of plate reinforcement to the thin metal plate. In order for the plate reinforcement to properly perform the structural function, a certain level or more of weld coupling strength is required, and a welding leg length of at least 70% of the web structure thickness of the plate reinforcement is usually required. In other words, in order to perform post-welding of metal plate reinforcement with a web thickness of 6 mm, a welding leg length of at least 4 mm is required.

In addition, when the thickness of a base steel plate is too thin compared to the welding leg length, there is a problem that the overall structural stability is damaged in addition to welding deformation, and when general welding equipment such as CO₂ welding is used to implement the welding leg length equal to or more than a certain thickness, the inner core is likely to be carbonized by the welding heat, and in this case, even the bonding strength is lost, so the structural stability is greatly reduced.

However, since the unit structural body 100 according to the present disclosure has a form in which the bent portion 100B is already included in itself, it is possible to manufacture an optimized composite structure in which the thicknesses of the upper plate 110 and the lower plate 120 are much thinner than the thickness required for welding.

In addition, in the unit structural body 100 according to the present disclosure, not only the flat plate part 100F but also the bent portion 100B that functions as the plate reinforcement is composed of a composite material rather than a single metal material, and according to this structure, there is an advantage in that the structural weight can be reduced by about 40 to 50% compared to when a plate reinforcement made only of metal is used.

The thickness of each of the upper plate 110 and the lower plate 120 of the unit structural body 100 according to the present disclosure may be 0.4 to 20 mm, respectively. In this case, as described below, when the unit structural body 100 according to the present disclosure is to be coupled with individual modules to form the multi-structural material 200 or to connect the unit structural body 100 to another structure, there are cases where a welding operation must be performed. Therefore, it is preferable that the thicknesses of the upper plate 110 and the lower plate 120 constituting the outer plate of the unit structural body 100 are formed to be 0.4 mm or more, which facilitates laser welding. In addition, in order to achieve the lightweight structural material, which is one of the technical challenges of the present disclosure, it is preferable that the thicknesses of the upper plate 110 and the lower plate 120 are formed to be 10 mm or less, and therefore the present disclosure suggests 0.4 to 10 mm as the most preferable thickness of the metal plate constituting the upper plate 110 and the lower plate 120.

The thickness of the core layer 130 of the unit structural body 100 according to the present disclosure may be configured to vary from 3 to 40 mm. In this case, when the core layer 130 is configured to have a "⊏" cross-sectional shape and includes both a portion formed in a horizontal direction and a portion formed in a vertical direction, the thicknesses of the core layers 130 formed in the two directions may be different. That is, the thickness of the core layer 130 of the flat plate part 100F and the thickness of the core layer 130 of the bent portion 100B may be formed to be the same, but may also be adjusted differently. In the case where it is desired to form the thicknesses differently, it is preferable that the thickness of the core layer 130 of the bent portion 100B, which functions as the plate reinforcement, is formed thinner than the thickness of the core layer 130 of the flat plate part 100F.

The overall width of the unit structural body 100 according to the present disclosure may be formed to be 300 to 1500 mm, and the height of the bent portion 100B protruding downwards may be formed to be 40 to 500 mm, which is a level at which structural performance capable of compensating for the overall deflection amount of the structural member can be implemented. Here, the height of the bent portion 100B may mean the height from the lowest end of the unit structural body 100 to the lower surface of the upper plate 110.

When the thickness, width, height, and the like of each configuration are designed within the range presented above, the unit structural body 100 according to the present disclosure may be manufactured with a maximum span (length) of as much as 6 to 10 m. In other words, the unit structural body 100 according to the present disclosure may be manufactured with a long-span structure of approximately 6 to 10 m. The reason why this is possible is that the core layer 130 made of a non-foaming polymer having a specific gravity of 0.8 to 1.8 and being very lightweight compared to metal is firmly bonded between the upper plate 110 and the lower plate 120 to provide basic structural performance, and in addition, the bent portion 100B protruding downward from both ends of the unit structural body 100 functions as the plate reinforcement.

The unit structural body 100 according to the present disclosure, which is manufactured with a long-span structure of 6 to 10 m, may exhibit structural performance equivalent to that of reinforced concrete even without additional reinforcing material in the direction across the width of the structural member within the corresponding length range. Therefore, as will be discussed later, when the multi-structural material 200 or an overlapping structural material 300 formed by a combination of the plurality of unit structural bodies 100 is used as a floor structural member, it is possible to implement a perfect double floor structure without a separate lower support.

As a preferred exemplary embodiment, when each of the upper plate 110 and the lower plate 120 of the unit structural body 100 according to the present disclosure is formed to have a thickness of 1 mm, and the core layer 130 is formed as a thin core having a thickness of 5 mm, the total thickness of the unit structural body 100 is only 7 mm. However, when the width of the unit structural body 100 in the structure is formed to have a height of 700 mm, the height of the bent portion 100B is 100 mm, and both ends are fixedly installed with a span (length) of 7 m, it can be confirmed through structural calculations that it is possible to secure very sturdy structural performance with a maximum deflection amount of 14 mm or less when a distributed load of 1 kN per square meter is applied to the unit structural body 100.

As described above, the unit structural body 100 according to the present disclosure has the material characteristics of being composed of a composite material of the metallic upper and lower plates 110 and 120 and the core layer 130 made of a non-foaming polymer, and is capable of implementing ultra-light weight and remarkably excellent structural performance due to the plate reinforcing structure of the bent portion 100B contained therein.

Specifically, the unit structural body 100 manufactured using the composite material according to the present disclosure can implement the equivalent structural performance with approximately 50 to 60% of the weight of the steel plate structural member mainly used in the shipbuilding field, and can implement the equivalent structural performance with approximately 15 to 25% of the weight of a reinforced concrete structure mainly used in the construction field.

In addition, it goes without saying that multi-structural materials 200 and overlapping structural materials 300 in which the plurality of high-performance unit structural bodies 100 is configured to connect and overlap each other as described above can naturally have structural characteristics that are even stronger.

More preferably, the unit structural body 100 according to the present disclosure may be manufactured so as to satisfy the minimum L/480 deflection amount standard. Here, "L" means the length (span) of the unit structural body 100, and it can be considered that the standard is satisfied when the central portion of the unit structural body 100 does not sag 1/480 or more of the total length of the unit structural body 100. As described above, the unit structural body 100 according to the present disclosure is manufactured to a length (span) of 7 m and the deflection amount that occurs when both ends are fixed is 14 mm or less, which is a numerical value of 7,000/480 ≒ 14.583 (mm) or less, and it can be seen that it satisfies the above-mentioned L/480 deflection amount standard.

The structural performance of the unit structural body 100 to satisfy the above-described deflection amount standard may be implemented by adjusting the height or shape of the bent portion 100B. In addition, by imparting a certain level or higher of bonding strength between the upper plate 110, the lower plate 120, and the core layer 130, it may help to implement the structural performance of the unit structural body 100. Specifically, the non-foaming polymer constituting the core layer 130 has adhesive strength on its own, and as described below, during the process in which the liquid non-foaming polymer concentrate is cured, the surfaces in contact with the upper plate 110 and the lower plate 120 are airtightly bonded. Therefore, in the present disclosure, a bonding strength of 1 to 10 MPa, more preferably 6 MPa, may be imparted between the upper plate 110 and the core layer 130 and between the lower plate 120 and the core layer 130.

Even in a form in which the bent portion 100B is formed by a separate metal angle 140 as in the exemplary embodiment illustrated in (g) of FIG. 2, it is possible to achieve sufficient strength simply by inserting and bonding the metal angle 140 between the upper plate 110 and the lower plate 120 without the need for welding of the metal angle.

The metal angle 140 may be inserted between the upper plate 110 and the lower plate 120 so that the contacting surfaces may be bonded by an adhesive, and the surface in contact with the core layer 130 may be bonded by the self-adhesive force of the non-foaming polymer that forms the core layer 130. In this case, in order to prevent the peeling phenomenon of the bonding surface, a bonding strength of 1 to 10 MPa, more preferably 6 MPa, may be imparted between the upper plate 110 and the lower plate 120 and the metal angle 140 as described above.

Meanwhile, when configuring the core layer 130 of the unit structural body 100 according to the present disclosure, it is also possible to additionally use a high-performance insulating material that already has insulation and structural performance. In this case, since a high-performance insulating material with low thermal conductivity is additionally placed between the upper plate 110 and the lower plate 120, it is possible to have excellent performance in terms of insulation.

More specifically, a core layer 130 may be formed by placing a high-performance insulating material having a thermal conductivity of lower than 0.02 W/mK together with the non-foaming polymer between the upper plate 110 and the lower plate 120. For example, when the core layer 130 is formed to further include a vacuum insulation panel (VIP) having a thermal conductivity of 0.004 W/mK, the overall thickness of the unit structural body 100 increases to 20 to 40 mm, but in terms of insulation, it is possible to achieve insulation performance that is about 6 to 10 times better than that of a general expanded polystyrene (EPS) insulating material. In addition, since the structural strength increases in proportion to the 2 to 3 powers of the thickness increase due to the characteristics of the composite material, it is possible to realize lightweight but superior structural performance.

In addition, when the vacuum insulation panel is included within the non-foaming polymer, the vacuum insulating material may be more effectively protected from an external impact, and the gas inflow and outflow into the vacuum insulation panel is completely blocked by the airtight structure of the non-foaming polymer, so that the lifespan of the vacuum insulation panel may be extended almost permanently.

In the case where the core layer 130 is composed only of the non-foaming polymer, there is an advantage in that the thickness of the unit structural body 100 may be optimized and manufactured to a very thin thickness, and in the case where a high-performance insulating material such as the vacuum insulation panel is additionally included together with the non-foaming polymer, the unit structural body 100 is manufactured more easily (since the non-foaming polymer concentrate can be applied to the surface of the high-performance insulating material and used as an adhesive) and excellent insulating performance may be obtained. Therefore, when forming the core layer 130 of the unit structural body 100 according to the present disclosure, whether to use the non-foaming polymer alone or in combination with the high-performance insulating material may be selected and applied by considering the advantages of each method.

For reference, when the core layer 130 is composed of only the high-performance insulating material, the coupling force with the upper plate 110 and the lower plate 120 is weak, making it difficult to secure sufficient structural performance. Therefore, the unit structural body 100 of the present disclosure may obtain satisfactory structural performance only when the non-foaming polymer surrounding the high-performance insulating material is firmly fixed by adhesion between the upper plate 110 and the lower plate 120.

### B. Manufacturing Method of Unit Structural Body

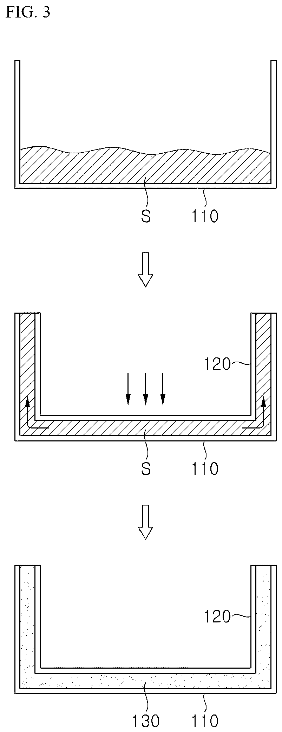

Next, with reference to FIGS. 3 to 6, a specific manufacturing method of the unit structural body 100 according to the present disclosure will be described.

The thickness of the plate reinforcement used in ships varies from 6 to 30 mm, but a thin thickness of about 6 to 15 mm is usually used. When the plate reinforcement is redisposed with the composite material structure of the non-foaming polymer and metal proposed in the present disclosure, a metal thin plate having a thickness of about 1 to 3 mm may be used for the upper plate 110 and the lower plate 120, and the thickness of the non-foaming polymer constituting the core layer 130 may be formed into a very thin structure of about 5 to 15 mm.

However, it is not realistically easy to form the non-foaming polymer structure with such a thin thickness as mentioned above. Because the non-foaming polymer is basically viscous, when the space to be filled is formed too narrow, frictional resistance occurs greatly when the concentrate is injected, making it difficult for the concentrate to evenly spread within the space. According to a certain ship regulation that specifies the basic performance and structural requirements of ships considering the manufacturing characteristics between metal and non-foaming polymer, it is recommended that the core composed of non-foaming polymer is formed with a thickness of 15 mm or more, and when this is not followed, separate approval should be obtained.

The manufacturing methods described below relate to a case where the core layer 130 of the unit structural body 100 is formed of a non-foaming polymer (for example, non-foaming polyurethane), and are proposed in particular to solve the manufacturing difficulty mentioned above, that is, the problem of difficulty in forming the core layer 130 composed of a non-foaming polymer with a thin thickness, and more preferably, a method is proposed that makes it possible to obtain a uniform core layer 130 by evenly filling the corresponding space with the non-foaming polymer even when the core layer 130 is formed with a thickness of 15 mm or less.

### 1) First Manufacturing Method

A progress of a first manufacturing method of the unit structural body 100 according to the present disclosure is explained with reference to FIG. 3.

First, in a state where the upper plate 110 is turned over, a liquid non-foaming polymer concentrate S is poured into the space formed by the flat portion and the edge portion of the upper plate 110. In this case, the non-foaming polymer concentrate S may be poured with an amount that is about 2% more than the amount (this is, the amount corresponding to the volume actually occupied by the core layer) that can completely fill the space formed between the upper plate 110 and the lower plate 120 when the lower plate 120 is covered later.

Then, in a state where the non-foaming polymer concentrate S is poured into the space of the upper plate 110, the lower plate 120 is inserted from above and pressed down. The lower plate 120 may be pressurized using a hydraulic device or the like until the gap between the lower plate 120 and the upper plate 110 becomes a predetermined and fixed gap. In this case, a separate spacer may be additionally disposed between the upper plate 110 and the lower plate 120 in order to maintain the gap between the upper plate 110 and the lower plate 120 at a designed thin thickness.

The non-foaming polymer concentrate S filling the lower portion of the space of the upper plate 110 may penetrate into the vertical space of the edges on both sides, this is, the space between the upper plate 110 and the lower plate 120 formed in the vertical direction, by the pressing force of the lower plate 120. In this case, the non-foaming polymer concentrate S fills the space with an amount greater than the volume actually occupied by the core layer 130, the excess amount may be pushed out and discharged.

The non-foaming polymer concentrate S evenly filled between the upper plate 110 and the lower plate 120, including the polymer concentrate that has risen to the vertical space, is cured over time to form the core layer 130, and the manufacturing of the unit structural body 100 according to the present disclosure is completed due to the formation of the core layer 130.

The first manufacturing method described above is the method of pouring the non-foaming polymer concentrate S into an open space to perform the filling, rather than injecting the non-foaming polymer concentrate into a sealed space. This manufacturing method has the advantage of being able to form a thin-thickness plate reinforcing structure by overcoming the frictional resistance that occurs when injecting the non-foaming polymer concentrate S through pressurization, and also being able to work while visually confirming whether the non-foaming polymer concentrate S properly fills the entire structure corresponding to the core layer 130.

Meanwhile, since the first manufacturing method described above proceeds in an open cavity manner, an area where the non-foaming polymer concentrate S and air come into contact occurs, which may cause the formation of air bubbles. As described above, these air bubbles can be removed through a process of injecting an amount of non-foaming polymer concentrate S that is at least 2% more than the amount corresponding to the volume of the core layer 130 and pushing out the excess amount out of the structural material.

For reference, FIG. 3 illustrates the most basic form (the form illustrated in FIG. 1 and (a) of FIG. 2) of the unit structural body 100 according to the present disclosure as an example. When either the upper plate 110 or the lower plate 120 is not bent and is formed only in the horizontal direction, the shape of the plate is temporarily made into a "⊏" shape using a temporary dam, and after the non-foaming polymer concentrate S is cured and the core layer 130 is completed, the present manufacturing method can be applied by removing the temporary dam.

### 2) Second Manufacturing Method

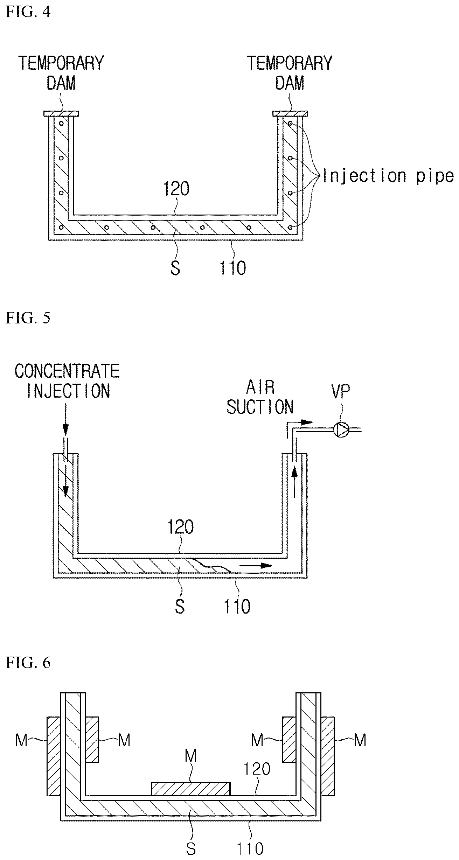

Referring to FIG. 4, a second manufacturing method of the unit structural body 100 according to the present disclosure is a method of forming a sealed space between the upper plate 110 and the lower plate 120 and injecting the non-foaming polymer concentrate into the sealed space, but the injection tube for injecting the non-foaming polymer concentrate is divided into several small tubes instead of one.

Normally, in the non-foaming polymer, a chemical reaction occurs while two liquids of organic compounds such as ISO and polyol are mixed, and curing begins from this point on. Since the chemical reaction only takes a few minutes, the injection of the non-foaming polymer concentrate must also be completed within a few minutes. In addition, since the non-foaming polymer concentrate itself is viscous, it may be difficult to spread the non-foaming polymer concentrate evenly within a few minutes.

The present manufacturing method is intended to solve the above-mentioned process difficulties by dividing the injection tube for injecting the non-foaming polymer concentrate into several small tubes and arranging the small tubes closely within the space where the core layer 130 is to be formed, thereby enabling the non-foaming polymer concentrate to be injected quickly and evenly within the sealed space between the upper plate 110 and the lower plate 120.

In the present manufacturing method as well, when either the upper plate 110 or the lower plate 120 does not have a "⊏" shape, the shape of the plate can be temporarily made into a "⊏" shape using a temporary dam and work can proceed, just like in the first manufacturing method described above, and of course, this can be applied to the manufacturing methods described below as well.

In addition, as illustrated in (h) of FIG. 2, when the unit structural body 100 according to the present disclosure includes the finishing member 150, the finishing member 150 may serve as the temporary dam.

### 3) Third Manufacturing Method

Referring to FIG. 5, a third manufacturing method of the unit structural body 100 according to the present disclosure uses a method of forming a sealed space between the upper plate 110 and the lower plate 120 and injecting the non-foaming polymer concentrate into the sealed space and performs the injection while removing air from the sealed space using a vacuum pump (VP).

More specifically, the sealed space is formed between the upper plate 110 and the lower plate 120, and then the non-foaming polymer concentrate is injected through an injection tube on one side, while a vacuum pump (VP) is used on the other side to suck air within the sealed space.

According to this third manufacturing method, not only is it possible to inject the non-foaming polymer concentrate in a thin thickness while overcoming a frictional resistance due to the pressure difference between the inside and outside of the sealed space, but there is also an advantage in that rapid injection is possible due to the suction power of a vacuum pump (VP).

### 4) Fourth Manufacturing Method

The upper plate 110 and lower plate 120 used in the manufacturing of the unit structural body 100 according to the present disclosure use metal plates that are much thinner than steel plates used for general ships. Therefore, there is a construction-related inconvenience due to this, namely, that since the thickness of the metal plate is too thin, it is difficult to maintain the shape of the plate and manage the flatness before or during the process of filling the core (non-foaming polymer).

Conventionally, a spacer is used to maintain the shape (or maintain the gap) in the process of filling the core between two plates. In addition, when the non-foaming polymer is used as the core, it has the characteristic of swelling slightly during the curing process, so the upper plate is pressed with a considerable load. However, in the case where the thickness of the metal plate forming the upper plate 110 and the lower plate 120 is formed very thinly below a certain level as in the present disclosure, it is difficult to maintain the shape and flatness of the plate using the conventional method described above.

In addition, a sagging phenomenon of the plate due to the weight of the upper plate also occurs. In this case, when the core is formed thick enough, the strength of the chemical reaction is also strong, so the sagging upper plate may be pushed up again using the swelling force. However, in the case where the core layer 130 is formed thinly as in the present disclosure, the swelling force is weak, so it is insufficient to restore the sagging of the upper plate 110 due to the weight.

In addition, the unit structural body 100 according to the present disclosure includes a structure which is bent downward. In this case, it is also very difficult to maintain a constant bending angle due to the characteristics of the upper plate 110 and lower plate 120 being composed of a thin plate.

The fourth manufacturing method of the unit structural body 100 according to the present disclosure is proposed to solve the above-mentioned difficulties in the manufacturing method. While the first to third manufacturing methods described above are methods related to filling of the non-foaming polymer, the fourth manufacturing method can be viewed as a method related to maintaining the overall shape and flatness of the structural material before and during the injection of the non-foaming polymer.

Specifically, as illustrated in FIG. 6, when a magnet M is disposed on the upper surface of the lower plate 120 disposed on the upper side in a state where the space between the upper plate 110 and the lower plate 120 is filled with the non-foaming polymer concentrate S, the upper surface of the lower plate 120 can be kept in a flat state by closely contacting the magnet M due to the magnetic field generated by the magnet M.

For reference, in the present exemplary embodiment, since the manufacturing process of the unit structural body 100 is performed in a state where the upper plate 110 and the lower plate 120 are turned over, the magnet M is placed on the upper surface of the lower plate 120. When the manufacturing process is performed by placing the upper plate 110 on the upper side, the magnet M should be placed on the upper surface of the upper plate 110. In other words, there is no need to consider the flatness issue for the plate placed on the floor, and the magnet M should be placed on the upper surface of the plate placed on the upper side based on the non-foaming polymer concentrate S.

Here, the magnet M can be understood as a concept that includes all magnetic substances that may generate a force that attracts metals, including electromagnets. The magnet M does not need to be composed of a size corresponding to the entire area of the plate where flatness is to be maintained, and even when the magnet is disposed while occupying only a portion of the area, the effect of the entire plate becoming flat may be realized. In addition, a plurality of magnets M may be disposed on the plate, and when only one magnet M is used, it is preferable that the magnet is disposed in the center of the plate.

In addition, by disposing the magnets M on the side surfaces of the upper plate 110 and lower plate 120 that are erected vertically as well as horizontally, in the same principle, the flatness may be maintained and the desired bending angle may be obtained.

For convenience, only the disposition location of the magnet M is briefly illustrated in the drawings, but the magnet M may be configured to be included in a working jig or surface plate that fixes the positions of the upper plate 110 and the lower plate 120. In this case, even when a separate gripping portion is not provided in the working jig, the additional effect of easily gripping the upper plate 110 and the lower plate 120 made of a metal plate by the pulling force of the magnet may be obtained.

When applying the present manufacturing method, when there is no portion of the upper plate 110 and the lower plate 120 that is erected vertically (this is, not in the "⊏" shape), a magnet M may not be disposed in the portion.

In addition, the present manufacturing method may be implemented using a vacuum suction device instead of a magnet M. Specifically, by suctioning a specific portion of the plate where the flatness should be maintained with a vacuum suction device and applying the tensile force to the specific portion, the shape of the structural material may be maintained and the flatness may be maintained.

As in the case of applying a magnet M, the vacuum suction device may perform the flatness maintenance function by providing suction force only for a part of the plate, not the entire plate area, and it is preferable to suction the central portion of the plate where the flatness is to be maintained. In addition, it is also possible to apply a plurality of vacuum suction devices on one plate.

The unit structural body 100 according to the present disclosure, which is manufactured by applying the fourth manufacturing method as described above, may have a flat surface and maintain the same thickness overall, thereby realizing uniform structural performance. In addition, since the flatness problem is solved during the manufacturing process, the number of spacers disposed between the upper plate 110 and the lower plate 120 may be greatly reduced, thereby achieving the effect of reducing manufacturing labor-hours and costs.

Meanwhile, the first to fourth manufacturing methods described above may be applied in parallel with two or more methods. For example, while performing the first manufacturing method in a sealed space rather than an open cavity, it is possible to remove air in the sealed space using the vacuum pump of the third manufacturing method, and also, like the second manufacturing method, while performing injection of the non-foaming polymer concentrate using multiple injection tubes, it is also possible to apply the vacuum pump of the third manufacturing method together. In the case of the fourth manufacturing method, since it is a method applied to maintain the shape and flatness of the structural material, it can be said that it can be used in parallel with any other manufacturing method.

### 2. Second Embodiment - Multi-Structure Material

### A. Structure of Multi-Structural Material

The multi-structural material 200 having another embodiment of a lightweight structure according to the present disclosure may be configured by connecting a plurality of unit structural bodies 100 described above. In order to actually form a floor, ceiling, and wall structure of a building or a ship, it will be necessary to apply the multi-structural material 200 having a sufficient area secured by a continuous arrangement of a plurality of unit structural bodies 100.

Referring to FIGS. 7 and 8, the multi-structural material 200 according to the present disclosure may be manufactured by basically structurally coupling the plurality of unit structural bodies 100 along the width direction. In this case, the adjacent unit structural bodies 100 may be connected by constraining the facing bent portions 100B by welding or bolting.

More specifically, as illustrated in FIG. 7, when the outer surfaces of the facing bent portions 100B are formed of metal, either welding or bolting may be freely applied, and as illustrated in FIG. 8, when the outer surface of the core layer 130 forming the bent portion 100B is exposed, bolting may be more suitably applied.

The multi-structural material 200 formed by coupling the plurality of unit structural bodies 100 may be positioned anywhere on the upper or lower side of an existing concrete slab. That is, the multi-structural material 200 according to the present disclosure may be applied anywhere in the floor or ceiling structure of a building, and of course, may also be applied to the wall structure of a building as needed.

Meanwhile, the unit structural body 100 according to the present disclosure may be structurally connected to a wall only at both ends along the longitudinal direction, instead of directly coupling individual modules, to form the floor or ceiling structure. Specifically, in a space where a floor or ceiling structure is to be formed, the plurality of unit structural bodies 100 may be fixed to a wall only at both end portions along the longitudinal direction, and adjacent unit structural bodies 100 may be disposed in close contact with each other along the width direction, or may be disposed spaced apart from each other at a predetermined interval. In addition, a floor structure or a ceiling structure may be formed by constructing a floor finishing material on the upper side of a plurality of unit structural bodies 100 that is arranged continuously, or by constructing a ceiling finishing material on the lower side.

That is, the multi-structural material 200 according to the present disclosure does not necessarily require the coupling between the unit structural bodies 100. Even when the unit structural bodies 100 constituting the multi-structural material 200 are airtightly sealed or spaced apart at a predetermined interval, it is possible to form a floor or ceiling structure without structural problems by performing finishing construction in the space therebetween.

In addition, in the structure in which the unit structural bodies 100 are not connected to each other in the width direction as described above, when a floor impact occurs, the entire floor does not vibrate, but only the individual unit structural body 100 that received the impact vibrates, so there is an advantage in that the impact propagation is locally limited. In addition, when the individual unit structural body 100 vibrates, friction with other adjacent unit structural bodies 100 does not occur or can be minimized, so vibration/noise reduction performance may be expected.

### B. Application Examples and Effects of Multi-structural Material

Next, specific application examples of the multi-structural material 200 according to the present disclosure and the resulting operational effects will be described.

### 1) Floor Structure of Building (Double Floor Structure)

The multi-structural material 200 according to the present disclosure may be applied to a double floor structure of a building, representatively. Hereinafter, the double floor structure implemented using the multi-structural material 200 according to the present disclosure will be described in detail.

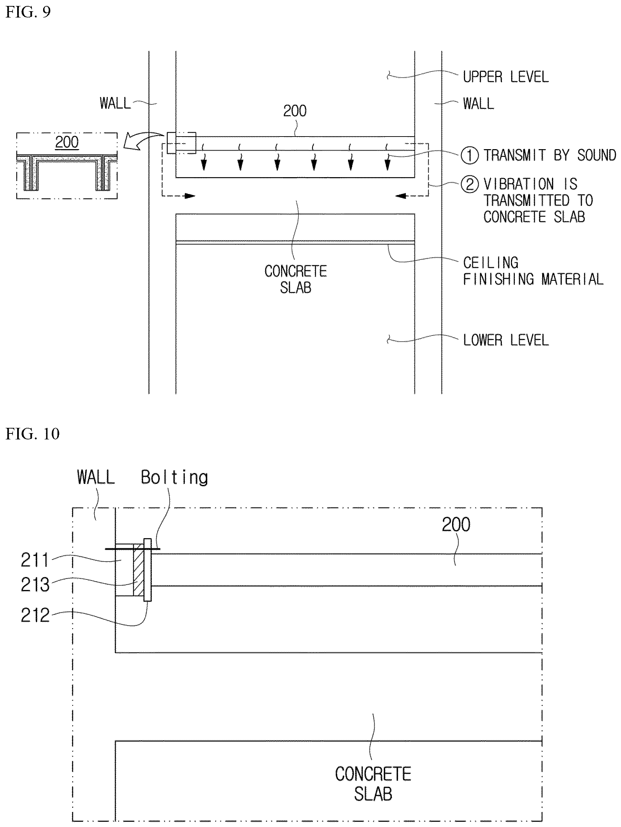

Referring to FIG. 9, the multi-structural material 200 according to the present disclosure may be fixed to the wall of the building on the upper level at both ends along the longitudinal direction. In this case, the multi-structural material 200 should be disposed with a slight gap from the concrete slab forming the floor of the upper level to implement the double floor structure so that the inter-floor noise reduction performance may be significantly improved.

In general, in a multi-story building such as an apartment, a house, an studio apartment, or a building, the portion between the upper and lower levels is divided by a concrete slab, and the concrete slab is used as the floor on the upper level and as the ceiling on the lower level.

Conventionally, floor construction is done on a concrete slab so that it can be used as a floor on the upper level. Specifically, an insulating material and hot water pipe are installed on the concrete slab, and mortar work is performed thereon as a final step to form a floor on which people can actually walk.

However, the conventional floor structure as described above has a problem in that the impact or friction applied to the floor is transmitted to the lower level through the concrete slab, resulting in serious inter-floor noise. The problem of inter-floor noise is being solved by implementing the double floor structure, but as mentioned above, the existing double floor structure still has the problem of inter-floor noise being transmitted through the supports that support the upper floor on the concrete slab.

However, when forming the upper floor with a multi-structural material 200 according to the present disclosure to implement the double floor structure, even when each unit structural body 100 constituting the multi-structural material 200 is configured as a long-span structure, the deflection amount is very limited, so sufficient structural performance can be secured simply by fixing both ends of the multi-structural material 200 along the longitudinal direction to the building wall. Accordingly, there is no need to install a separate support between the concrete slab and the upper floor, and the upper floor and the concrete slab can be structurally separated, making it possible to implement the double floor structure that is very effective in reducing inter-floor noise.

Referring to FIG. 9, the effect of reducing inter-floor noise by applying the multi-structural material 200 according to the present disclosure will be described in more detail.

Generally, the inter-floor noise may be divided into two types: first, weight or friction impact sound generated on the upper level is transmitted through the floor structure, and second, weight or friction impact sound is transmitted from the upper level through the wall. Meanwhile, in the double floor structure implemented using the multi-structural material 200 according to the present disclosure, the impact sound generated from the side of the multi-structural material 200 constituting the upper floor on the upper level is converted into sound and transmitted to the concrete slab on the lower side. In other words, since the impact sound is transmitted as sound energy rather than directly through vibration transmission, the total amount of energy transmitted to the lower level may be significantly reduced.

In addition, since the vibration transmitted through the wall from the multi-structural material 200 constituting the upper floor on the upper level is not directly transmitted to the ceiling finishing material on the lower level but is first transmitted to the concrete slab, the amount of vibration and sound energy applied to the ceiling finishing material on the lower level may be significantly reduced.

In addition, the present disclosure proposes various buffer connection structures between the multi-structural material 200 and the wall so as to more effectively block noise transmission through the wall when connecting the multi-structural material 200 to the building wall, thereby maximizing the inter-floor noise reduction effect described above. Hereinafter, connection structures that can be applied between the multi-structural material 200 and the wall according to the present disclosure will be described with reference to FIGS. 10 to 13.

First, the first wall connection structure will be described with reference to FIG. 10. In the first wall connection structure, an anchor pad 211 is installed on the building wall, and a metal plate 212 for fastening to the anchor pad 211 is fixed by welding to both ends along the longitudinal direction of the multi-structural material 200. The anchor pad 211 and the metal plate 212 are fixed and connected to each other through bolting coupling, and in this case, a vibration-reducing buffering material may be disposed between the anchor pad 211 and the metal plate 212 to alleviate the impact transmitted from the multi-structural material 200 to the wall.

Meanwhile, in fixing the multi-structural material 200 according to the present disclosure to the wall, it is not necessary to fix all of the plurality of unit structural bodies 100 constituting the multi-structural material 200 to the wall, and it is also possible to fix only some of the plurality of unit structural bodies 100 to the wall as long as sufficient structural performance for the design load can be secured.

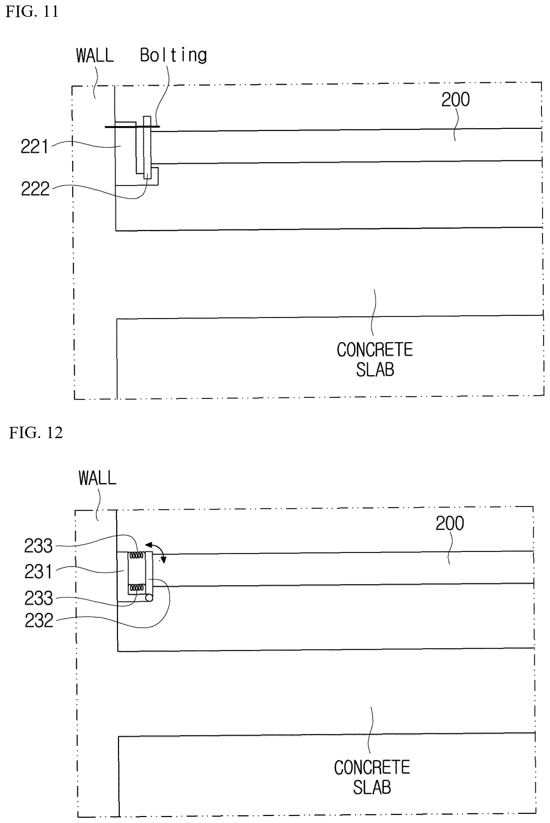

Next, a second wall connection structure will be described with reference to FIG. 11. In the second wall connection structure, the lower portion of an anchor pad 221 installed on a building wall is provided in the form of an L-shaped angle (or an L-shaped angle member is coupled to the lower end of the anchor pad 221), and the lower end portion of a metal plate 222 is inserted into a space formed by a lower L-shaped angle of the anchor pad 221 so as to be supported while preventing horizontal separation. The upper end portion of the metal plate 222 may be fixed to the anchor pad 221 or the wall through the bolting coupling.

In addition, for the purpose of alleviating the shock transmitted from the multi-structural material 200 to the wall, a vibration-reducing buffering material or spring may be additionally disposed between the metal plate 222 and the anchor pad 221.

This connection structure is a method in which the lower end portion of the metal plate 222 is received and supported in a form that is simply inserted into the space without being mechanically fastened by a separate member, and only the upper end portion is fastened by bolting. Therefore, since the metal plate 222 is disposed on the anchor pad 221 including an L-shaped angle and only the upper end portion is fixed to the wall, a structurally strong connection is possible while being very easy to work on site.

Next, a third wall connection structure will be described with reference to FIG. 12. In the third wall connection structure, an anchor pad 231 installed on a building wall and a metal plate 232 welded and fixed to an end along the longitudinal direction of the multi-structural material 200 are connected in a hinge manner so that the metal plate 232 can rotate around the hinge axis, and an elastic spring 233 is disposed between the anchor pad 231 and the metal plate 232 so as to alleviate impact transmitted from the multi-structural material 200 to the wall.

In the present connection structure, it is also possible to place a vibration-reducing buffering material between the anchor pad 231 and the metal plate 232 instead of the spring 233, or to place the vibration-reducing buffering material together with the spring 233.

While the second wall connection structure illustrated in FIG. 11 is a structure that does not restrain the lower end portion of the metal plate 222 and allows a slight movement within a certain range, the third wall connection structure illustrated in FIG. 12 can be understood as the structure that restrains the lower end portion of the metal plate 232 but allows the entire plate to move flexibly against vibration through a hinge connection.

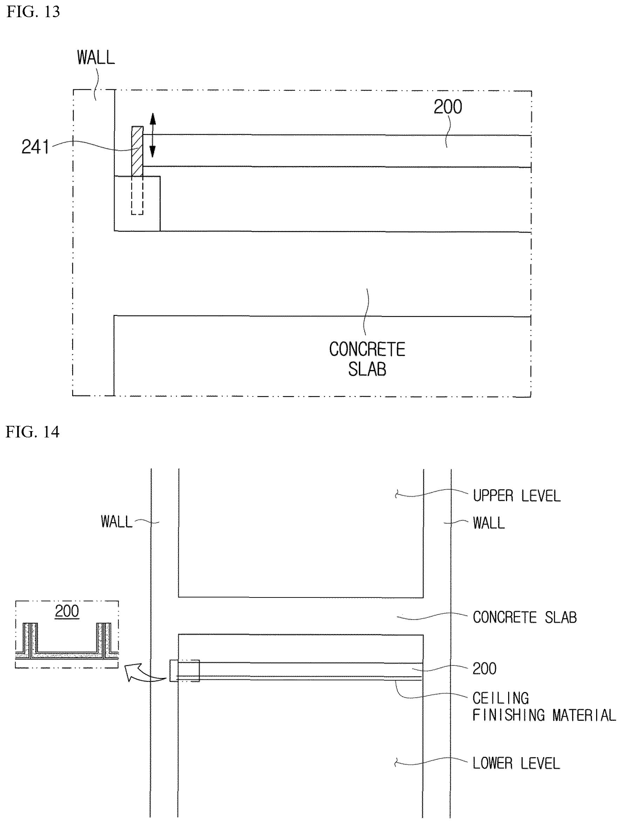

Lastly, in a fourth wall connection structure illustrated in FIG. 13, the multi-structural material 200 is not directly connected to the building wall and is connected to the building wall through a vibration reduction device 241. Here, the vibration reduction device 241 may be a hydraulic device or spring device capable of absorbing vibration in the vertical direction.

When the fourth wall connection structure is applied, vibration caused by impact from the multi-structural material 200 is not transmitted to the wall. In addition, since vibration transmitted from the multi-structural material 200 to the concrete slab may be absorbed by the vibration reduction device 241, impact transmitted in the vertical direction may also be effectively alleviated.

In addition, although not illustrated in the drawing, in addition to the first to fourth wall connection structures described above, various buffering materials are disposed in the space between the multi-structural material 200 and the concrete slab to implement an additional damping effect, thereby enabling additional reduction of inter-floor noise.

When the multi-structural material 200 according to the present disclosure is used as the floor structure of a building, the following effects are achieved.
(1) First, there is an effect of reducing the inter-floor noise through the implementation of the double floor structure.

As described above, when applying the multi-structural material 200 according to the present disclosure, a sturdy double floor structure that does not require the support may be implemented, and thus, inter-floor noise may be drastically reduced.

(2) Second, it has the effect of simplifying ondol floor leveling construction.

As described above, since the multi-structural material 200 according to the present disclosure has significantly superior structural performance, there is no need to construct an ondol construction (heating construction) on a lightweight floor to increase structural strength, unlike the existing double floor structure. Therefore, when the multi-structural material 200 according to the present disclosure is installed on the existing concrete slab, the work for hot water pipes or heating/cooling pipes required for ondol construction may be conveniently performed on the existing concrete, and there is no need to perform separate floor leveling mortar work.

Since hot water pipes are placed after constructing the insulation material on the concrete slab in the conventional ondol floor leveling construction, in order to form a flat floor that can be walked on, floor mortar work should be performed or separate dry ondol panels should be additionally installed before the finishing flooring can be constructed. However, since the multi-structural material 200 according to the present disclosure functions as a sufficient structural material in itself, the separate floor mortar work or dry ondol panel installation work performed in the related art is not necessary, and since the finishing flooring can be constructed directly on the multi-structural material 200, the ondol floor leveling construction may be made much simpler.

In addition, since the structure that needs to be heated is much lighter and simpler, it is also much more advantageous in terms of thermal efficiency.

(3) Third, there is an effect of simplifying step construction.

The manufacturing of the step structure for the floor slab in a bathroom or an entrance is also very convenient. Generally, the floor of a bathroom or an entrance is designed to have a step that is about tens of millimeters (mm) lower than other floor slabs, and in conventional construction methods, separate formwork or floor leveling work is required to form such a step. However, according to the present disclosure, since all floor slabs on the same floor are manufactured flat and the step construction is only performed on the multi-structural material 200, the step construction may be simplified.

### 2) Ceiling Structure of Building

Referring to FIG. 14, it is also possible to install a multi-structural material 200 according to the present disclosure under a concrete slab and utilize the multi-structural material 200 as a ceiling structure.

In this case, the ceiling finishing material of the lower level may be directly attached to the lower surface of the multi-structural material 200, so separate support construction and carpentry work for attaching the ceiling finishing material are not required, which has the effect of simplifying the ceiling construction.

In addition, since various pipes and decorative items (for example, ceiling-type air conditioners) to be installed on the ceiling may be easily attached to the multi-structural material 200 according to the present disclosure, application of the modular construction method is also possible through pre-installation.

Meanwhile, when the multi-structural material 200 according to the present disclosure is used as the ceiling structure, the function for inter-floor noise does not need to be considered, so the multi-structural material may be connected to the building wall through a simple mechanical fastening such as bolting coupling. However, the present disclosure is not limited to this, and it goes without saying that a buffer structure such as the first to fourth wall connection structures described above may be applied as needed.

### 3) Ship Structure

The multi-structural material 200 according to the present disclosure can be applied not only to buildings but also to the construction of the deck of a ship or the floor structure of a ship accommodation, and can have the following effects when applied to a ship.
(1) First, it has the effect of solving the existing welding thermal deformation problem.

As described above, in the related art, the steel plate structural member 10 as illustrated in FIG. 19 was used to form a deck of a ship, and in this case, it was impossible to avoid the problem of serious thermal deformation occurring due to welding the plate reinforcement 20 under the steel plate structural member 10.

In addition, when only the structural performance as a general ship deck is considered, the thickness of the steel plate structural member 10 should be formed to be approximately 6 mm, but considering the thermal deformation due to welding of the plate reinforcement member 20, the thickness of the steel plate structural member 10 is often increased to approximately 10 mm from the beginning and manufactured. However, even when the thickness of the steel plate structural member 10 is increased, the problem of thermal deformation due to welding of the plate reinforcement member 20 still exists, so in most cases, a considerable amount of time is invested in corrective work through heat processing after welding of the plate reinforcement member 20.

However, since the lightweight structure according to the present disclosure already includes the bent portion 100B that functions as the plate reinforcement as the structure of the unit structural body 100, when applying the lightweight structure, welding for attachment of the plate reinforcement is not required, so that the amount of welding required for the entire process and the resulting thermal deformation can be greatly reduced, and thus the problem of thermal deformation due to welding of the steel plate structural member 10 that is currently being used primarily in the shipbuilding industry may be fundamentally solved.

In addition, even when manufacturing a multi-structural material 200 according to the present disclosure through welding between unit structural bodies 100, the amount of the thermal deformation of the entire plate may be greatly reduced because welding is performed between unit structural bodies 100 that already have rigidity.

The multi-structural material 200 according to the present disclosure is expected to have excellent utility in the shipbuilding industry, especially when applied to the manufacturing of the car deck for a pure car carrier (PCC), and is also effective in forming the floor structure of a ship accommodation.

(2) Second, there is the effect of reducing the weight of the ship.

The unit structural body 100 according to the present disclosure composed of composite materials and the multi-structural material 200 manufactured by coupling the unit structural bodies can realize the equivalent structural performance with a weight that is about 40 to 50% lighter than that of the existing steel plate, and thus may greatly contribute to reducing the weight of ships.

### 3. Third Embodiment - Overlapping Structural Material

### A. Structure of Overlapping Structural Material

Meanwhile, in another embodiment of the lightweight structure according to the present disclosure, the overlapping structural material 300 may be configured by overlapping the multi-structural materials 200 described above in a vertical manner.

Referring to FIG. 15, the overlapping structural material 300 according to the present disclosure may be configured in a form in which the multi-structural materials 200 configured by connecting the plurality of unit structural bodies 100 are disposed to be overlapped vertically.

Since the overlapping structural material 300 according to the present disclosure is to be fixed at both ends along the longitudinal direction within the structure when used as a floor, ceiling or wall structure, there is no need for a direct structural connection between the multi-structural materials 200 disposed vertically.

In addition, the overlapping structural material 300 according to the present disclosure may be placed with a predetermined gap between the multi-structural materials 200 facing each other in the vertical direction, and when this structure is used as the double floor structure, the effect of reducing inter-floor noise may be further doubled.

### B. Application Examples and Effects of Overlapping Structural Material

The overlapping structural material 300 according to the present disclosure may be used for various purposes similarly to the multi-structural material 200 described above. In particular, since the overlapping structural material 300 according to the present disclosure includes the double floor structure in itself, it may be preferably used as the floor structure of a building or a ship where the inter-floor noise reduction effect is expected. However, the present disclosure is not limited thereto, and it is of course possible to use the overlapping structural material as a wall or roof structure of a building or a ship.

In addition, the overlapping structural material 300 according to the present disclosure may easily add various additional functions by pre-constructing various decorative items in the space formed between the multi-structural materials 200 as the multi-structural materials are arranged to overlap each other in the vertical direction.

As a specific example of use, referring to FIG. 16, by installing an insulating material I and a heating/cooling pipe (P) in the space between upper and lower multi-structural materials 200 forming the overlapping structural material 300, an ondol function may be easily added to the overlapping structural material 200. Here, the insulation material I may be disposed only on the lower side of the heating/cooling pipe P so that the cooling or heating by a thermal fluid flowing through the heating/cooling pipe P can be well transferred upward, and the surrounding of the heating/cooling pipe P may be left as an empty space.

Generally, the ondol floor leveling construction requires a process of laying an insulation material on a concrete slab, installing a hot water pipe on the insulation material, and then applying finishing mortar on the hot water pipe. In order to achieve even flatness during the mortar construction, mortar with a high moisture content should be used, so the mortar takes a long time to be cured and the work is very cumbersome.

However, when applying the overlapping structural material 300 according to the present disclosure, the multi-structural material 200 placed on the upper side performs a structural function, so separate mortar construction is not required, and thus, the ondol structure and/or the floor heating and cooling structure may be constructed very conveniently and simply.

In addition, referring to FIG. 17, by adding a fireproof material R between the multi-structural material 200 disposed on the lower side and the insulation material I, it is also possible to realize fire resistance performance of the floor without a separate fireproof covering.

According to domestic and international floor fire resistance standards, the temperature rise of the non-heated surface of the structural material is important, but structural stability against fire is also considered equally important. More specifically, structural stability is evaluated by exposing the lower portion of the structural material to a heat source in a state where a weight (for example, 3 kN/m²) equal to or more than a certain load is disposed on the structural material, and checking the amount of deflection of the structure after a certain period of time (for example, 2 hours).

In the case of the conventional building structural member generally made of metal, when the building structural member is exposed to heat during the fire resistance test process and the temperature thereof is equal to or more than a certain temperature, structural performance thereof is lost. Therefore, additional follow-up work is performed to cover the portion below the metal with a fireproof material to meet fire resistance standards.

However, according to the structure of the present disclosure in which the fireproof material R is placed in advance inside the overlapping structural material 300 manufactured in a modular manner as illustrated in FIG. 17, even when the multi-structural material 200 disposed on the lower side loses the structural performance due to exposure to a heat source caused by a fire, the upper multi-structural material 200 protected by the fireproof material R may maintain its structural performance. Therefore, even when additional fireproof covering work is not performed unlike the related art, structural stability may be maintained in a fire situation, and the above-mentioned fire resistance standard may be easily satisfied.

Referring to FIG. 18, the overlapping structural material 300 according to the present disclosure may be fixed to the building wall at both ends along the longitudinal direction similarly to the multi-structural material 200, and when the overlapping structural material 300 is used as the floor structure, the overlapping structural material may be disposed with a gap from the concrete slab forming the floor of the upper level.

In this case, as described above, each of the upper multi-structural material 200 and the lower multi-structural material 200 constituting the overlapping structural material 300 may be connected to the building wall, and only some of the plurality of unit structural bodies 100 constituting each multi-structural material 200 may be directly fixed to the wall.

In addition, when implementing the double floor structure with the overlapping structural material 300 according to the present disclosure, impact noise, which is a direct cause of inter-floor noise, is generated in the upper multi-structural material 200, so the upper multi-structural material 200 may be connected to the building wall to enable a buffering effect by applying the first to fourth wall connection structures described with reference to FIGS. 10 to 13 above, and the lower multi-structural material 200 may be connected to the wall through simple mechanical fastening such as bolting coupling.

When the overlapping structural material 300 according to the present disclosure is used as the floor structure of a building, the following effects may be expected.
(1) First, it is possible to implement an ultra-light long-span dry structure with superior structural performance, and it is possible to greatly increase the efficiency of the overall construction project when using the dry structure.

During construction, reinforced concrete floor construction is the most cumbersome and time-consuming basic skeleton construction in the entire construction. In particular, it is considered the most important construction in terms of construction management and performance implementation because the concrete floor is installed using wet construction methods that are greatly affected by the environment and have poor on-site conditions. Recently, there has been a case where a major accident occurred due to the forced construction of wet concrete slab to shorten the construction period.

The overlapping structural material 300 presented in the present disclosure weighs only about 30 to 40% of general concrete, but the overlapping structural material can implement a long-span structure that is much longer than the existing reinforced concrete floor structure, and above all, since the construction may be done using a dry method, it is hardly affected by the environment, and has the advantage of being able to drastically reduce cumbersome and poor on-site processes. In addition, unlike the wet method, since structural performance is implemented immediately after installation, the overall construction period may be significantly shortened.
(2) Second, since the overlapping structural material 300 itself includes the double floor structure, it is possible to construct the floor structure with an excellent inter-floor noise reduction effect. In other words, a high-performance floor structure with an excellent inter-floor noise reduction effect may be implemented with the own structure alone without a separate composite floor structural material or an impact absorbing device for reducing inter-floor noise.
(3) Thirdly, there is an advantage in that various types of pipes or ceiling attachments can be constructed in advance on the inside or the lower side of the overlapping structural material 300.

In particular, as explained above with reference to FIG. 16, since the insulating material I and the heating/cooling pipe P required for the floor ondol can be easily installed in the structure of the overlapping structural material 300 as a pre-installation, separate ondol floor leveling construction may be omitted, and thus the overall construction process may be greatly simplified. In addition, the floor temperature response to temperature control may be accelerated, and since the structure that needs to be heated is much lighter and simpler, it is also much more advantageous in terms of thermal efficiency.

In addition, as described above with reference to FIG. 17, according to the structure in which a fireproof material R is additionally placed within the structure of the overlapping structural material 300, self-fireproof performance may be sufficiently implemented without a separate subsequent fireproofing process.

The present disclosure is not limited to the described exemplary embodiments, and it is obvious to those skilled in the art that various modifications and variations can be made without departing from the spirit and scope of the present disclosure. Accordingly, such modifications or variations should fall within the scope of the claims of the present disclosure.

## Claims

1. A lightweight structure made of a composite material, comprising a multi-structural material including a plurality of unit structure bodies arranged sequentially in a width direction,
wherein each unit structure body includes a metallic upper plate, a metallic lower plate disposed apart from the upper plate by a predetermined gap, and a core layer formed between the upper plate and the lower plate and made of non-foaming polymer, and
the unit structure body includes a bending structure in which both ends along a width direction of an entire structure are bent downward and include a " 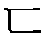 " shaped cross-sectional structure.

2. The lightweight structure of a composite material of claim 1, wherein the unit structural body includes a flat plate part formed in a horizontal direction and a bent portion bent downward from both ends of the flat plate part.

3. The lightweight structure of a composite material of claim 2, wherein the bent portions of the adjacent unit structural bodies are structurally coupled to each other through bolting or welding.

4. The lightweight structure of a composite material of claim 2, wherein the adjacent unit structural bodies are disposed apart from each other by the predetermined gap, and finishing construction is performed to constitute a floor, ceiling, or wall in a space between the adjacent unit structural bodies.

5. The lightweight structure of a composite material of claim 3 or 4, wherein both ends of the multi-structural material along a longitudinal direction are fixed to a wall of a building to form a floor structure or ceiling structure of the building.

6. The lightweight structure of a composite material of claim 5, wherein when forming the floor structure of the building, the multi-structural material is disposed with a gap on an upper side of a concrete slab forming a basic frame of the building to form a double floor structure.

7. The lightweight structure of a composite material of claim 6, wherein a vibration-absorbing buffer structure including a vibration-reducing buffering material, spring, or hydraulic device is applied to a connection area between the multi-structural material and the wall.

8. The lightweight structure of a composite material of claim 2, further comprising an overlapping structural material in which the multi-structural materials are disposed to be overlapped vertically.

9. The lightweight structure of a composite material of claim 8, wherein a pair of multi-structural materials is disposed in a direction in which the bent portions face each other.

10. The lightweight structure of a composite material of claim 9, wherein modularization is performed by constructing an insulating material and heating/cooling pipe as pre-installation in a space between the pair of multi-structural materials.

11. The lightweight structure of a composite material of claim 10, wherein a fireproof material is additionally constructed between the insulating material and the multi-structural material.

12. The lightweight structure of a composite material of claim 8, wherein both ends of the overlapping structural material along a longitudinal direction are fixed to a wall of a building to form a floor structure or ceiling structure of the building.

13. The lightweight structure of a composite material of claim 12, wherein both ends of each of an upper multi-structural material and a lower multi-structural material constituting the overlapping structural material along the longitudinal direction are fixed to the wall.

14. The lightweight structure of a composite material of claim 13, wherein when forming the floor structure of the building, a vibration-absorbing buffer structure including a vibration-reducing buffering material, spring or hydraulic device is applied to a connection area between the upper multi-structural material and the wall.
